# EUROPEAN PATENT SPECIFICATION

(11) **EP 1 936 796 B1**
(45) Date of publication and mention of the grant of the patent: **23.11.2011**
(21) Application number: 06026831.5
(22) Date of filing: 22.12.2006
(51) Int. Cl.: H02M 7/797, H02M 7/5387

(54) **Inverter device**
Umrichtervorrichtung
Dispositif d'inverseur

(43) Date of publication of application: 25.06.2008
(73) Proprietor: Fuji Electric Co., Ltd., Kawasaki-shi Kanagawa (JP)
(72) Inventor: Ichihara, Takao, c/o Fuji Electric FA Comp. & Systems Co., Ltd., Suzuka-city, Mie 513-8633 (JP)
(74) Representative: MERH-IP Matias Erny Reichl Hoffmann

(56) References cited:
- EP-A2- 0 792 008
- WO-A-2005/043618
- WO-A2-2004/110837
- US-A1- 2003 076 232

## Description

This invention relates to an inverter device for driving an AC motor as a mechanical power source for any of multiple types of industrial machine in which repetitive operations are carried out in a preset running pattern.

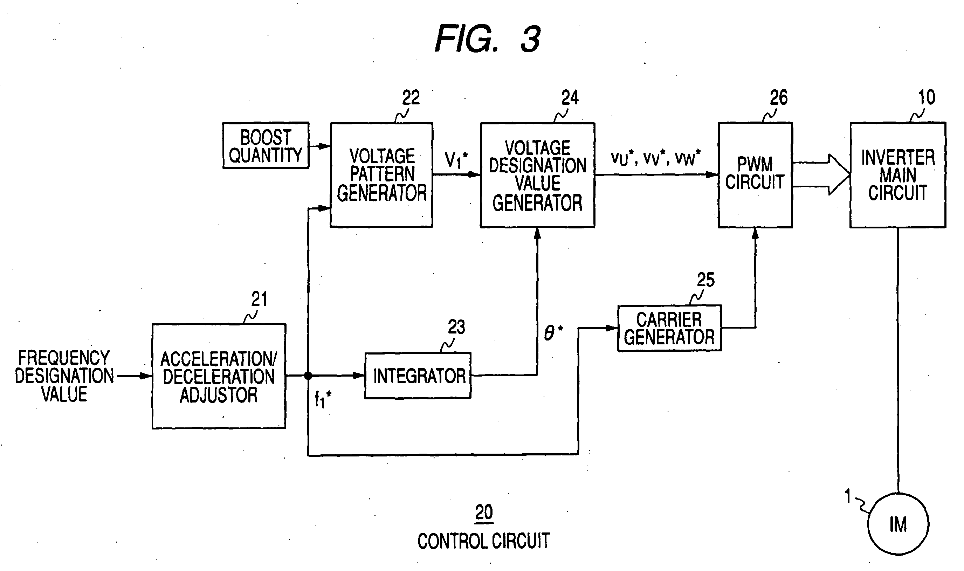

FIG. 3 is a circuit diagram showing an exemplary conventional inverter device of this type, a socalled V/f-control inverter.

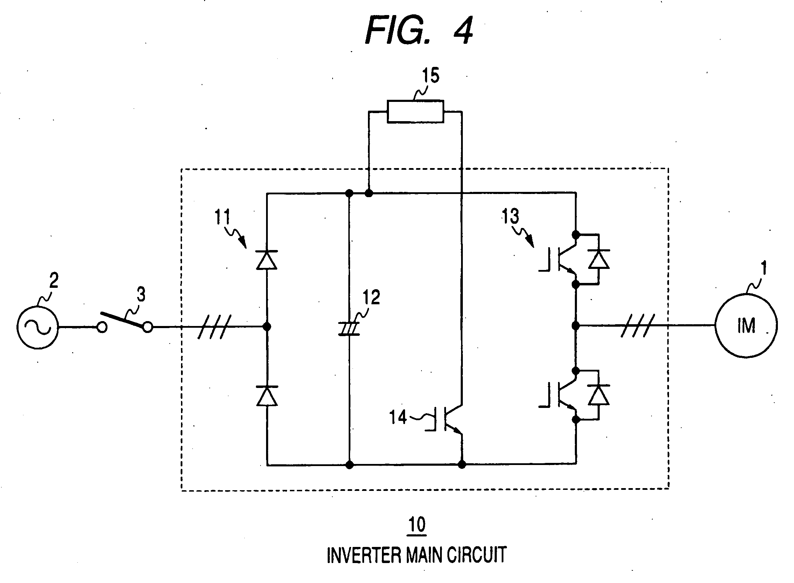

In FIG. 3, 10 represents an inverter main circuit having a configuration as shown in FIG. 4, which will be described below, and 20 represents a control circuit that performs control to supply desired AC power to an AC motor 1 from the inverter main circuit 10. The control circuit 20 includes: an acceleration/deceleration adjustor 21 that increases or decreases, with a desired gradient, a frequency command value from a superordinate controller, not shown, for controlling the running operation of the industrial machine, and ultimately converts it to a frequency setting value f₁^{*} corresponding to the frequency command value; a voltage pattern generator 22 that generates a primary voltage setting value V₁^{*} (DC quantity) for the AC motor 1 in accordance with a boost quantity shown in FIG. 3 for increasing the voltage in the V/f control and the frequency setting value f₁^{*} in order to maintain a constant magnetic flux even when the AC motor 1 is running in a low-speed zone; an integrator 23 that outputs a phase setting value Θ^{*} acquired by time integration of the frequency setting value f₁^{*}; a voltage command value generator 24 that generates AC voltage command values vᵤ^{*}, vᵥ^{*}, v_{w}^{*} of three phases based on the phase setting value Θ^{*} and the primary voltage setting value V₁^{*}; a carrier generator 25 that generates a carrier frequency that is gradually changed, if necessary, on the basis of the frequency setting value f₁^{*}; and a PWM circuit 26 that performs PWM calculation of each of the AC voltage command values vᵤ^{*}, vᵥ^{*}, v_{w}^{*}, for example, by a triangular wave signal based on the carrier frequency, and generates a driving signal to the inverter main circuit 10 corresponding to the result of the calculation.

FIG. 4 is a circuit diagram showing an exemplary detailed configuration of the inverter main circuit 10 shown in FIG. 3. When an AC power source 2 such as a commercial power source is connected to the inverter main circuit 10 via a contactor 3, the voltage is rectified by a diode rectifying circuit 11 of a three-phase bridge connection. This rectified voltage is smoothed to a smoothed DC voltage by a smoothing capacitor 12. The DC voltage is converted to an AC voltage having a desired amplitude and frequency by an inverter circuit 13 comprising a three-phase bridge connection made of antiparallel connected pairs of an IGBT and a diode as shown in FIG. 4. The IGBT 14 is turned into the ON-state when the voltage between the two ends of the smoothing capacitor 12 has exceeded a predetermined upper limit value because of a regenerative current caused by a braking operation of the AC motor 1. This ON-state causes the regenerative current to flow into a regenerative discharge resistor 15. As a result, the rise in the voltage between the two ends is restrained. Reference is made to JP-A-7-135731 and JP-A-2003-134839.

When the inverter device shown in FIG. 3 and FIG. 4 is used for controlling industrial machines in which repetitive operations are carried out in a preset running pattern, a calculated temperature rise value for each constituent element of the inverter main circuit 10 in one cycle of the running pattern is theoretically found, and the electric power capacity of each constituent element is selected so that the calculated value will not exceed an admissible tolerance value.

However, when such industrial machine is actually operated, the temperature rise value of a semiconductor device such as the inverter circuit 13 and a regenerative discharge resistor 15 as the constituent elements of the inverter main circuit 10 in one cycle of the running pattern may differ from the calculated temperature rise value. In the worst case, a protection circuit, not shown, of the inverter device can be overloaded after the running pattern has been repeated many times (for example, several hundred times or more) in the industrial machine. This raises a problem that the inverter device will be stopped and the subsequent operation cannot be continued.

Conventionally, in order to solve the above problem, the continuation of the operation of the inverter device is monitored while repeating the running pattern is repeated a predetermined number of times. However, there is another problem that this monitoring takes time and labor.

The document WO 2005/043618 A1 discloses a method and arrangement in connection with an inverter that comprises several power semiconductor components and a control apparatus arranged to control them, the control apparatus being arranged to control the power semiconductor components in response to a control quantity to generate an output voltage. The method comprises the steps of determining the change of the temperature or a quantity affecting the temperature of one or more power semiconductor components, and controlling with the control apparatus the power semiconductor components in response to both the control quantity to generate an output voltage and the change rate of the temperature or quantity affecting the temperature of the power semiconductor components to reduce the temperature change and the change rate.

The document EP 0 792 008 A2 discloses a method and apparatus for protecting a plurality of same semiconductor switching elements used in a PWM inverter from being overheated. In this prior art a junction temperature rise Tn of one of the switching elements is approximated from the calculated power loss on the basis of the output frequency of the inverter, the output current of the inverter, and a control factor and when the temperature Tn is found to be higher than a predetermined limit value Tnref, no gate signal for the switching elements is inputted or the PWM off duty ratio of a pulse duty ratio of the gate signal is increased to limit the output current of the inverter so as to avoid an overheating of the corresponding switching element to occur.

The documents WO 2004/110837 A2 and US 2003/0076232 A1 disclose overheating protection schemes similar to that of EP 0 792 008 A2. In each case, the actual temperature of an electronic component as a protection target is calculated or estimated and compared with a predetermined limit value. When the estimated temperature is equal to or exceeds the limit value, the protection target is deactivated of otherwise controlled so as to prevent its temperature from increasing further.

It is an object of this invention to provide an inverter device that can solve the above problem.

This object is achieved by an inverter device as claimed in claim 1. Preferred embodiments of the invention are defined in the dependent claims.

According to the invention, because the temperature rise estimating unit is added to the conventional inverter device and the running pattern of one cycle is observed, the maximum temperature rise estimated value for each constituent element of the inverter device in the case where the running pattern is periodically repeated can be derived, as will be described later. As selection of the electric power capacity of the constituent elements and a modification of the running pattern are carried out so that the estimated value will not exceed a tolerance value of the constituent element, unwanted operation stop that would occur during continuous operation can be prevented.

### BRIEF DESCRIPTION OF THE DRAWINGS

- FIG. 1: is a circuit diagram of an inverter device according to an embodiment of the invention.
- FIG. 2: is a flowchart for explaining the operation of FIG. 1.
- FIG. 3: is a circuit diagram of an inverter device according to a conventional example.
- FIG. 4: is a circuit diagram showing a detailed configuration of a part of FIG. 3.

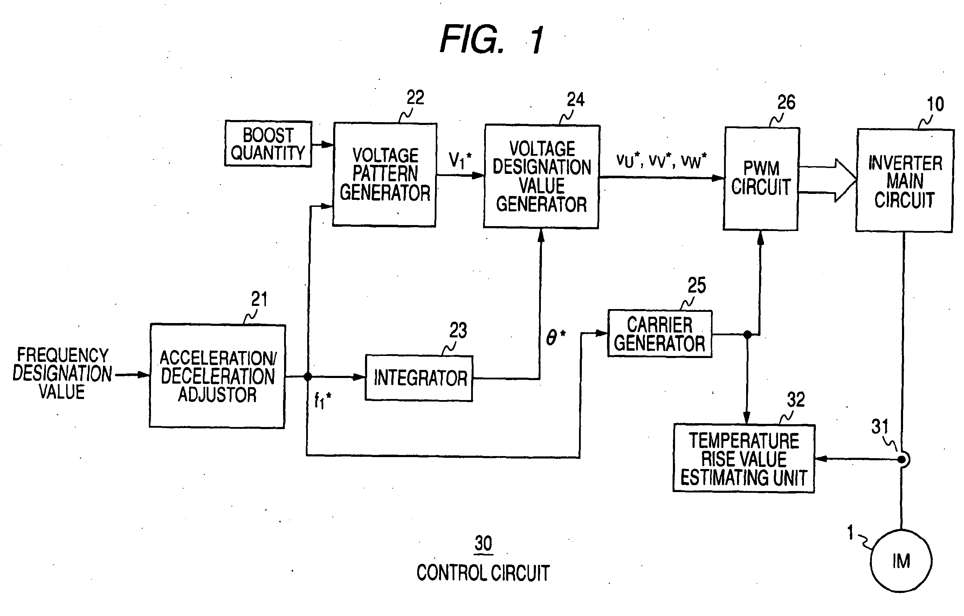

FIG. 1 is a circuit diagram of an inverter device according to an embodiment of the invention. Elements having the same functions as in the circuit shown in FIG. 3 are denoted by the same reference numerals and will not be described further in detail.

A control circuit 30 of the inverter device shown in FIG. 1 differs from the control circuit 20 of FIG. 3 by additionally having a current detector 31 and a temperature rise value estimating unit 32.

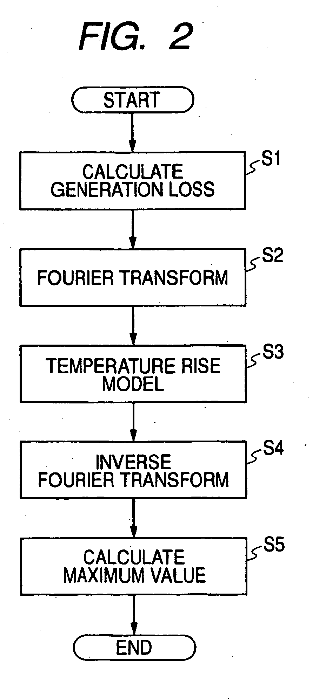

The operation of the temperature rise value estimating unit 32 shown in FIG. 1 will be described hereinafter with reference to the flowchart of FIG. 2.

With the temperature rise value estimating unit 32 in FIG. 1, the running pattern of one cycle in the industrial machine is observed by the inverter device, and on the basis of the observation data, a maximum temperature rise estimated value for the inverter circuit 13 (see FIG. 4) constituting the inverter main circuit 10 is derived. This deriving method will be described hereinafter with reference to Fig. 2.

First, in step S1, a generation loss of the inverter circuit 13 is periodically calculated, with a preset period, from a respective detection value (sample value) of the current detector 31 and the respective value of the carrier frequency from the carrier generator 25 as the observation data. The generation loss is approximately proportional to the current value from the current detector 31, the proportional constant being a function of the carrier frequency. Hence, to obtain the generation loss from respective observation data (current and carrier frequency) the respective proportional constant needs to be known. These proportional constants must be acquired in advance by experiment or the like.

In step S2, the generation loss values in the time domain calculated in step S1 are Fourier-transformed to data in the frequency domain.

In step S3, temperature rise data is calculated on the basis of the data in the frequency domain acquired in step S2 and a temperature rise model of a circuit that includes a semiconductor device of the inverter circuit 13 and a cooler of the inverter circuit 13 and that is regarded to be equivalent to a first-order lag circuit.

Next, in step S4, the temperature rise data is inversely Fourier-transformed to temperature rise values in the time domain.

Moreover, in step S5, a maximum temperature rise estimated value in the case where the running pattern is periodically repeated is derived on the basis of the calculated temperature rise value in the time domain and the ambient temperature of the inverter device.

By using a scale transform method for the inverse Fourier transform when carrying out the calculations of steps S4 and S5, it is easy to derive the maximum temperature rise value in a short time. Moreover, the temperature of the cooler of the inverter circuit 13 may be used instead of the ambient temperature of the inverter device.

With the temperature rise value estimating unit 32 of the inverter device shown in FIG. 1, which drives the AC motor 1 as a mechanical power source for an industrial machine in which repetitive operations are carried out in a preset running pattern, the running pattern of one cycle in the industrial machine is observed by the inverter device, and on the basis of the observation data, a maximum temperature rise estimated value for the regenerative discharge resistor 15 (see FIG. 4) included in the inverter main circuit 10 is derived. This deriving method will be described hereinafter with reference to Fig. 2.

First, in step S1, a generation loss of the regenerative discharge resistor 15 in the case where the IGBT 14 is in the ON-state is periodically calculated, with a preset period, from a respective detection value (sample value) of the current detector 31 and the ON/OFF-state of the IGBT 14 (see FIG. 4) as the observation data. The generation loss is approximately proportional to the current value from the current detector 31 an the ON period of the IGBT 14. Hence, to obtain the generation loss from respective observation data (current and ON period) the relation between the respective values of generation loss, current and ON period needs to be known. This relation must be acquired in advance by experiment or the like.

In step S2, the generation loss values in the time domain calculated in step S1 are Fourier-transformed to data in the frequency domain.

In step S3, temperature rise data is calculated on the basis of the data in the frequency domain acquired in step S2 and a temperature rise model of the regenerative discharge resistor 15 that is regarded to be equivalent to a first-order lag circuit.

Next, in step S4, the temperature rise data is inversely Fourier-transformed to temperature rise values in the time domain.

Moreover, in step S5, a maximum temperature rise estimated value for the regenerative discharge resistor 15 in the case where the running pattern is periodically repeated is derived on the basis of the calculated temperature rise value in the time domain and the ambient temperature of the inverter device.

When the temperature rise value of the regenerative discharge resistor 15 can be regarded as being substantially proportional to the ON-period of the IGBT 14, the observation of the detection value of the current detector 31 at this point, that is, the current value to the inverter main circuit 10, can be omitted.

## Claims

1. An inverter device adapted to supply AC power to an AC motor (1) and apply a variable-speed control to the motor (1), where the motor (1) drives an industrial machine through a given running pattern repeated in periodic cycles, **characterised by**
a temperature rise value estimating unit (32) that is adapted to observe the running pattern through one cycle of the industrial machine by the inverter device to obtain for that one cycle observation data related to the generation loss of a constituent element of the inverter device and to estimate, on the basis of said observation data and a temperature rise model, a maximum value of the temperature rise of the constituent element that is to be expected when the running pattern Is continuously repeated.

2. The inverter device according to claim 1, wherein the observation data include the output current and a carrier frequency of the inverter device.

3. The inverter device according to claim 2, wherein the observation data further include the ambient temperature of the inverter device.

4. The inverter device according to any one of claims 1 to 3, wherein said constituent element is a semiconductor device of an inverter main circuit (10).

5. The inverter device according to any one of claims 1 to 3, wherein said constituent element is a regenerative discharge resistor of an inverter main circuit (10).

6. The inverter device according to any one of claims 1 to 5, wherein said temperature rise value estimating unit (32) is adapted to derive a respective maximum temperature rise estimated value for each of plural constituent elements of the inverter device on the basis of observation data of the one cycle and a temperature rise model for the respective constituent element of the inverter device.

## Patentansprüche

1. Inverter-Vorrichtung, die ausgebildet ist zum Liefern von AC-Leistung an einen AC-Motor (1) und Anwenden einer "variable Geschwindigkeit"-Steuerung auf den Motor (1), wobei der Motor (1) eine gewerbliche Maschine über ein gegebenes Laufmuster antreibt, das in periodischen Zyklen wiederholt wird, **gekennzeichnet durch**
eine Temperaturanstiegswertschätzeinheit (32), die ausgebildet ist zum Beobachten des Laufmusters über einen Zyklus der gewerblichen Maschine **durch** die Inverter-Vorrichtung, um für diesen einen Zyklus Beobachtungsdaten zu erlangen, die den Erzeugungsverlust eines Komponentenelements der Inverter-Vorrichtung betreffen, und zum Schätzen, auf der Basis der Beobachtungsdaten und eines Temperaturanstiegsmodells, eines Maximalwerts des Temperaturanstiegs des Komponentenelements, der erwartet wird, wenn das Laufmuster kontinuierlich wiederholt wird.

2. Inverter-Vorrichtung gemäß Anspruch 1, wobei die Beobachtungsdaten den Ausgabestrom und eine Trägerfrequenz der Inverter-Vorrichtung umfassen.

3. Inverter-Vorrichtung gemäß Anspruch 2, wobei die Beobachtungsdaten weiter die Umgebungstemperatur der Inverter-Vorrichtung umfassen.

4. Inverter-Vorrichtung gemäß einem der Ansprüche 1 bis 3, wobei das Komponentenelement eine Halbleitervorrlchtung einer Inverter-Hauptschaltung (10) ist.

5. Inverter-Vorrichtung gemäß einem der Ansprüche 1 bis 3, wobei das Komponentenelement ein regenerativer Entladewiderstand einer Inverter-Hauptschaltung (10) ist.

6. Inverter-Vorrichtung gemäß einem der Ansprüche 1 bis 5, wobei die Temperaturanstiegswertschätzeinheit (32) ausgebildet ist zum Ableiten eines jeweiligen maximalen Temperaturanstiegsschätzwerls für jedes einer Vielzahl von Komponentenelementen der Inverter-Vorrichtung auf der Basis von Beobachtungsdaten des einen Zyklus und eines Temperaturanstiegsmodells für das jeweilige Komponentenelement der Inverter-Vorrichtung.

## Revendications

1. Dispositif d'inverseur conçu pour alimenter en courant alternatif un moteur (1) à courant alternatif et pour appliquer une commande de vitesse variable au moteur (1), dans lequel le moteur (1) entraîne une machine industrielle par une configuration de marche se répétant en des cycles périodiques, **caractérisé par**
une unité (32) d'estimation d'une valeur d'élévation de la température, qui est conçue pour observer la configuration de marche pendant un cycle de la machine industrielle par le dispositif d'inverseur pour obtenir pour ce un cycle une donnée d'observation se rapportant à la perte de production d'un élément constitutif du dispositif d'inverseur et pour estimer, sur la base de cette donnée d'observation et d'un modèle d'élévation de la température, une valeur maximum de l'élévation de la température de l'élément constitutif à laquelle on doit s'attendre lorsque la configuration de marche se répète de manière continue.

2. Dispositif d'inverseur suivant la revendication 1, dans lequel la donnée d'observation comprend le courant de sortie et une fréquence porteuse du dispositif d'inverseur.

3. Dispositif d'inverseur suivant la revendication 2, dans lequel la donnée d'observation comprend en outre la température ambiante du dispositif d'inverseur.

4. Dispositif d'inverseur suivant l'une quelconque des revendications 1 à 3, dans lequel l'élément constitutif est un dispositif à semiconducteur d'un circuit (10) principal d'inverseur.

5. Dispositif d'inverseur suivant l'une quelconque des revendications 1 à 3, dans lequel l'élément constitutif est une résistance de décharge de réaction d'un circuit (10) principal d'inverseur.

6. Dispositif d'inverseur suivant l'une quelconques des revendications 1 à 5, dans lequel une unité (32) d'estimation de la valeur d'élévation de la température est conçue pour déduire une valeur estimée maximum respective de l'élévation de la température pour chacun d'une pluralité d'éléments constitutifs du dispositif d'inverseur sur la base d'une donnée d'observation du un cycle et d'un modèle d'élévation de la température pour l'élément constitutif respectif du dispositif d'inverseur.
